# EUROPÄISCHE PATENTSCHRIFT

(11) **EP 1 342 507 B1**
(45) Veröffentlichungstag und Bekanntmachung des Hinweises auf die Patenterteilung: **09.05.2007**
(21) Anmeldenummer: 03002247.9
(22) Anmeldetag: 01.02.2003
(51) Int. Cl.: B05B 15/12

(54) **Anlage zum Beschichten von Gegenständen mit Pulver**
Apparatus for the powder coating of objects
Dispositif pour le revêtement en poudre d'objets

(30) Priorität: 05.03.2002 DE 10209499
(43) Veröffentlichungstag der Anmeldung: 10.09.2003
(73) Patentinhaber: EISENMANN Anlagenbau GmbH & Co. KG, 71032 Böblingen (DE)
(72) Erfinder: Hihn, Erwin, 72141 Walddorfhäslach (DE); Palesch, Johannes, 71093 Weil im Schönbuch (DE); Halbmeyer, Axel, 71034 Böblingen (DE)
(74) Vertreter: Ostertag, Ulrich

(56) Entgegenhaltungen:
- DE-A- 4 134 701
- US-A- 4 409 009
- US-A- 5 591 240

## Beschreibung

Die Erfindung betrifft eine Anlage zum Beschichten von Gegenständen mit Pulver, insbesondere zum Pulverlackieren, mit
a) einer Kabine, in der die Gegenstände durch mindestens eine Applikationseinrichtung mit Pulver beaufschlagbar sind;
b) einer Luftzuführeinrichtung, mit der Zuluft in die Kabine eingebracht werden kann;
c) einer Absaugeinrichtung, mit der aus dem Innenraum der Kabine über mindestens einen in dem Boden befindlichen Gemischauslass ein Gemisch aus Luft und überschüssigem Pulver absaugbar ist;
d) einer Mehrzahl von Filtereinheiten, die wahlweise unter den Gemischauslass der Kabine gefahren werden können und jeweils ein das Pulver von der Luft trennendes Filter aufweisen.
   Eine derartige Anlage ist aus US 4409009 bekannt.
   Bei der Beschichtung von Gegenständen mit Pulver, insbesondere beim Pulverlackieren, lässt es sich nicht vermeiden, dass ein erheblicher Teil des die Applikationseinrichtung verlassenden Pulvers nicht auf den zu beschichtenden Gegenständen haften bleibt. Es ist bekannt, dieses Überschußpulver (häufig "Overspray" genannt) durch einen Luftstrom weitgehend wiederzugewinnen, der die Kabine von oben nach unten durchströmt. Der Luftstrom nimmt dabei das vagabundierende Überschusspulver auf. Über einen im Boden befindlichen Gemischauslass wird eine Mischung aus Luft und Pulver abgesaugt und einer Filtereinheit zugeleitet, in welcher das Pulver aus dem Luft-/Pulvergemisch abgetrennt wird, um einer Wiederverwertung zugeführt zu werden.
   Wenn ein häufiger Wechsel des verarbeitenden Pulvers, beispielsweise ein Wechsel der Farbe des Lackpulvers, erforderlich ist, ist es nicht rationell, die Filtereinheiten jeweils zu säubern. Vielmehr ist es bekannt, für diesen Fall eine Mehrzahl von verfahrbaren Filtereinheiten vorzusehen, die jeweils für eine bestimmte Pulverart, also beispielsweise eine Pulverfarbe, bestimmt sind. Jeweils diejenige Filtereinheit wird an den Gemischauslass der Kabine angedockt, die zur Verarbeitung derjenigen Pulverart bestimmt ist, die gerade in der Kabine eingesetzt wird. Bei einem Wechsel der Pulverart braucht nur die jeweils aktive Filtereinheit durch eine andere Filtereinheit ersetzt zu werden.
   Bei bekannten Anlagen der eingangs genannten Art besaßen die Filtereinheiten Räder, mit denen sie auf dem Raumboden abrollten. Dies war jedoch im Handling nicht unproblematisch: Zu einen wiesen die Filtereinheiten insbesondere beim Richtungswechsel einen nicht unerheblichen Rollwiderstand auf. Bei einem unebenenen Raumboden war der Austausch der Filtereinheiten zum anderen mit Justierarbeiten verbunden. Beim Farbwechsel mußte nicht nur die Filtereinheit mühsam ausgetauscht sondern auch die gesamte Kabine und deren Auslaßtrichter gereinigt werden.
   Aufgabe der vorliegenden Erfindung ist es daher, eine Anlage der eingangs genannten Art derart auszugestalten, dass der Austausch der Filtereinheiten bei einem Wechsel der Pulverart vereinfacht ist.
   Diese Aufgabe wird erfindungsgemäß dadurch gelöst, dass
e) die Filtereinheiten an einem Tragschienensystem hängend verfahrbar sind.

Da erfindungsgemäß die Filtereinheiten an dem Tragschienensystem hängen, brauchen sie nicht mehr dem Verlauf des Boden zu folgen. Dies hat eine doppelte Konsequenz: Die Höhe, auf der sich die Filtereinheiten bewegen, ist durch das Tragschienensystem vorgegeben. Ein Nachjustieren beim Anschließen einer neuen Filtereinheit ist insofern nicht mehr erforderlich. Durch die Ebenheit der von dem Tragschienensystem vorgegebenen Rollflächen brauchen beim Verfahren der Filtereinheiten nur geringe Kräfte aufgebracht zu werden.

Zweckmäßig ist, wenn das Tragschienensystem einen Mehrzahl von Parkpositionen aufweist, an denen jeweils eine Filtereinheit bereitgehalten werden kann. Der grundsätzliche Aufbau eines derartigen Tragschienensystems kann somit einem "Verschiebebahnhof" ähneln. Es kann wahlweise so ausgelegt sein, dass jede Filtereinheit jede Parkposition erreichen kann. Alternativ ist die Auslegung des Tragschienensystemes jedoch auch so möglich, dass jeder Filtereinheit eine ganz bestimmte Parkposition zugeordnet ist. Die Parkpositionen können sich von den übrigen Bereichen des Tragschienensystemes durch Einrichtungen zur Arretierung der Filtereinheiten und/oder zur Erfassung der Anwesenheit der Filtereinheit unterscheiden.

In ihrer "aktiven" Arbeitsposition unterhalb des Gemischauslasses der Kabine müssen die Filtereinheiten selbstverständlich nach oben offen sein. Während der Bereitstellungszeiten in einer Parkposition sollte jedoch jede Filtereinheit durch einen Deckel verschließbar sein, um Verschmutzungen zu vermeiden.

Hierzu kann beispielsweise an jeder Parkposition ein Deckel vorgesehen sein, der gegen den Einlass der in der entsprechenden Parkposition befindlichen Filtereinheit anlegbar ist. Dieser Deckel ist also permanent einer bestimmten Parkposition und nicht einer bestimmten Filtereinheit zugeordnet.

Selbstverständlich ist es aber auch möglich, dass jede Filtereinheit mit einem abnehmbaren Deckel versehen ist, wobei sich der Deckel mit der Filtereinheit mitbewegt. Beispielsweise kann der Deckel an der Filtereinheit verschwenkbar angebracht sein.

Besonders bevorzugt wird diejenige Ausführungsform der Erfindung, bei welcher der Einlass jeder Filtereinheit durch einen Faltenbalg gebildet ist, der in vertikaler Richtung dehnbar ist und eine Dichtung trägt. Die jeweils "aktive" Filtereinheit wird also an den Gemischauslass der Kabine dadurch angeschlossen, dass der Faltenbalg nach oben ausgefahren wird und die Dichtung gegen den Gemischauslass der Kabine angelegt wird.

Dabei kann am oberen Rand des Faltenbalgs ein Dichtrahmen angebracht sein, auf dem die Dichtung befestigt ist und der mittels einer Antriebseinrichtung in vertikaler Richtung bewegbar ist. Als Antriebseinrichtung kommt insbesondere eine Kolben-/Zylindereinheit in Betracht.

Schließlich ist es zweckmäßig, wenn auf dem Schienensystem mindestens eine Reinigungsposition vorgesehen ist, an welcher zum Reinigen der Filtereinheiten dienende Einrichtungen angeordnet sind. Als derartige Einrichtungen kommen insbesondere Absaug- und Ausblasgebläse, gegebenenfalls auch mit flüssigen Reinigungsmitteln arbeitende Geräte in Betracht. Wird eine bestimmte Pulverart in der Anlage für längerer Zeit nicht mehr benötigt und ist es deshalb nicht mehr erforderlich, eine bestimmte Filtereinheit für diese Pulverart zu reservieren, so kann die fragliche Filtereinheit in die Reinigungsposition auf dem Schienensystem gebracht, dort gründlich von der alten Pulverart gereinigt und auf diese Weise zur Verwendung mit einer anderen Pulverart präpariert werden.

Ein Ausführungsbeispiel der Erfindung wird nachfolgend anhand der Zeichnung näher erläutert; es zeigen
- Figur 1:: einen Schnitt durch eine Pulverlackieranlage parallel zur Bewegungsrichtung der zu lackierenden Gegenstände;

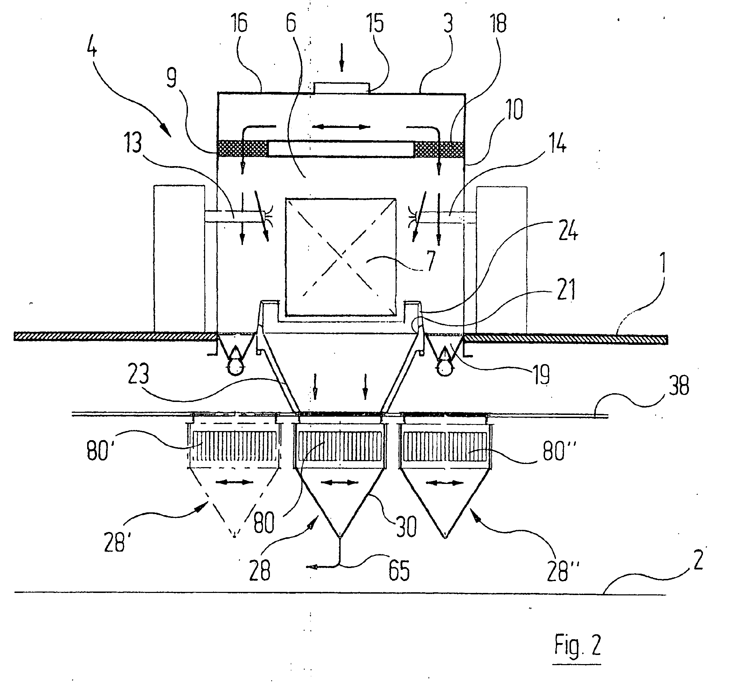

- Figur 2:: einen Schnitt durch die Pulverlackieranlage von Figur 1 senkrecht zur Bewegungsrichtung der zu lackierenden Gegenstände;
- Figur 3:: eine Draufsicht auf das Schienensystem, auf dem die Filtereinheiten der Lackieranlage der Figuren 1 und 2 verfahrbar sind;
- Figur 4:: eine Detailvergrößerung aus Figur 1.

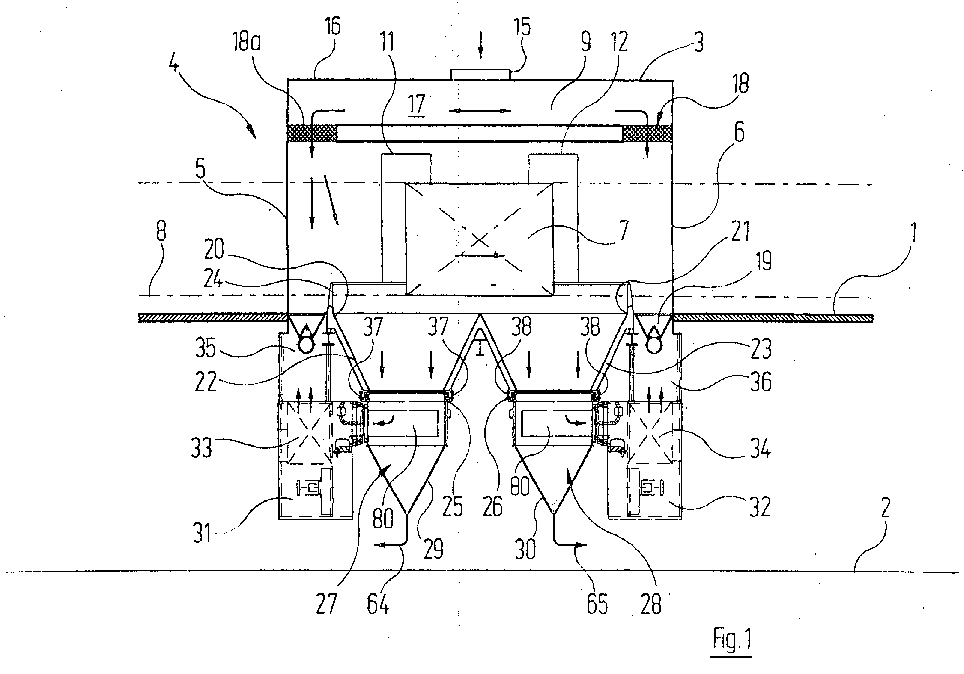

Wie bei Pulverlackieranlagen weitgehend üblich, so umfasst auch die dargestellte eine Begehungsebene 1, die, beispielsweise von einem nicht abgebildeten Stahlbau getragen, in Abstand oberhalb des Raumbodens 2 verläuft. Auf der Begehungsebene 1 ist das im wesentlichen quaderförmige Gehäuse 3 einer Pulverlackierkabine 4 aufgebaut. Durch verschließbare Tore an gegenüberliegenden Stirnseiten 5 und 6 des Gehäuses 3 der Pulverlackierkabine 4 werden die zu lackierenden Gegenstände 7 in einem bestimmten Arbeitstakt mit Hilfe eines schematisch dargestellten Fördersystemes 8 in den Innenraum der Pulverlackierkabine 4 ein- und aus diesem wieder ausgebracht. In den seitlichen, sich parallel zur Bewegungsrichtung der Gegenstände 7 erstreckenden Wänden 9, 10 der Pulverlackierkabine 4 befinden sich Öffnungen 11, 12 (vgl. Figur 1), durch welche sich die Applikationseinrichtungen 13, 14 hindurch erstrecken, mit deren Hilfe in bekannter Weise Lackpulver auf die Gegenstände 7 aufgetragen wird.

Durch einen Einlass-Stutzen 15 in der Oberseite 16 der Pulverlackierkabine 4 wird Zuluft in ein Luftplenum 17 eingebracht, das nach unten durch eine abgehängte Filterdecke 18 begrenzt wird. Die Luft, welche die Filterdecke 18 durchströmt, fließt im Wesentlichen in den Randbereichen 18a des Gehäuses 3 der Pulverlackkabine 4 nach unten, nimmt dabei vagabundierende Pulverteilchen auf und strömt dort zum Teil zu einer entlang des gesamten Randes des Bodens des Gehäuses 6 im Innenraum der Pulverlackierkabine 4 ringförmig geführten Absaugrinne 19, die mit einem nicht dargestellten Absauggebläse verbunden ist. Das mit dieser Strömung mitgeführte Pulver wird verworfen.

Ein weiterer Teil des Gemisches aus Luft und Pulverteilchen strömt zu zwei verhältnismäßig großen, in Bewegungsrichtung der Gegenstände 7 hintereinander angeordneten, in der Draufsicht rechteckigen Absaugöffnungen 20, 21, die von den oberen Einlassöffnungen zweier Absaugtrichter 22, 23 gebildet werden. Die mengenmäßigen Verhältnisse, in denen das Luft-/ Pulvergemisch in die Absaugrinne 19 einerseits und in die Absaugöffnung 20, 21 anderseits strömt, kann durch die Breite der Absaugrinne 19 und durch die Geometrie einer Schürze 24 beeinflusst werden, welche auf den Boden der Pulverlackierkabine 4, die beiden Öffnungen 20 und 21 umgebend, aufgesetzt ist und so weit nach oben reicht, daß sie den unteren Bereich der Gegenstände 7. Durch den seitlichen Abstand, den die Schürze 24 von dem Werkstück 7 aufweist, kann außerdem Einfluss auf die Geschwindigkeit genommen werden, mit der das Luft-/Pulvergemisch an den Gegenständen 7 vorbei zu den Ansaugöffnungen 20, 21 strömt.

An die unteren, einen kleineren Querschnitt besitzenden Auslassöffnungen 25, 26 der beiden Ansaugtrichter 22, 23 ist jeweils eine verfahrbare Filtereinheit 27, 28 dicht angeschlossen. Diese weisen ein Gehäuse 29 bzw. 30 auf, das in seinem oberen Abschnitt quaderförmig, in seinem unteren Abschnitt trichterförmig ausgebildet ist. Im oberen Teil der Gehäuse 29, 30 der Filtereinheiten 27, 28 ist jeweils ein Filter 80 mit einer Mehrzahl von Filterelementen angeordnet, das von Luft durchströmt werden kann. Die Luft fließt, wie durch die Pfeile in Figur 1 angedeutet, durch ein seitliches Fenster in quaderförmigen oberen Abschnitt der Gehäuse 29, 30 aus und in einen Aggregatekasten 31, 32 hinein, in dem sich jeweils ein Gebläse 33, 34 befindet. Durch das Gebläse 33, 34 wird die Luft in Luftkanäle 35, 36 befördert, die entweder im Falle einer Kreisführung der Luft zu einer Luft-Aufbereitungseinheit oder zur Außenatmosphäre führt.

Die Filter 80 sind jeweils in einem Rahmen so eingebaut, daß diesem die einzelnen Filterelemente bei Bedarf über ein seitliches Fenster in dem entsprechenden Gehäuse 29, 30 entnommen werden können.

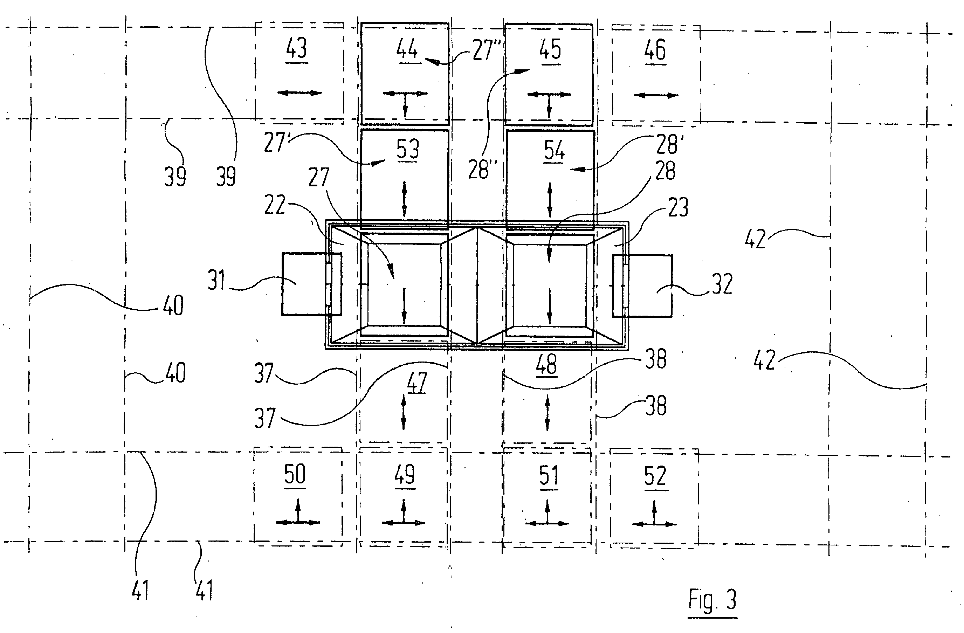

Die fahrbaren Filtereinheiten 27, 28 sind jeweils an Schienen 37, 38 aufgehängt, die sich quer zur Bewegungsrichtung der Gegenstände 7 erstrecken (vgl. insbesondere Figur 3). Die Schienen 37, 38 sind Teil eines komplexeren Schienensystemes, welches beim dargestellten Ausführungsbeispiel zusätzlich Schienen 39, 40, 41, 42 aufweist, die entlang der Seiten eines großen Rechteckes geführt sind, welches die Pulverlackierkabine 4 umgibt. Dort, wo geradlinige Schienenabschnitte 37 bis 42 ineinander einmünden, sind geeignete in der Zeichnung nicht dargestellte Umsetzeinrichtungen, zum Beispiel Drehtische, vorgesehen, so dass die Filtereinheiten 27, 28 das gesamte Schienensystem durchfahren können.

Auf dem Schienensystem 37 bis 42 befindet sich eine Vielzahl von Parkpositionen, an denen jeweils eine verfahrbare Filtereinheit 27', 27", 28', 28" bereitgehalten werden kann, die in ihrer Bauweise den Filtereinheiten 27 und 28 vollständig entspricht, jedoch zur Verwendung bei einem andersfarbigen Lackpulver bestimmt ist. An einer Seite der Absaugtrichter 22, 23, in Figur 3 oberhalb von diesen, sind zwei Positionen 53, 54, vorgesehen, an denen mit Hilfe nicht dargestellter Einrichtungen die verfahrbaren Filtereinheiten zur Vorbereitung auf eine neue Farbe gereinigt werden können.

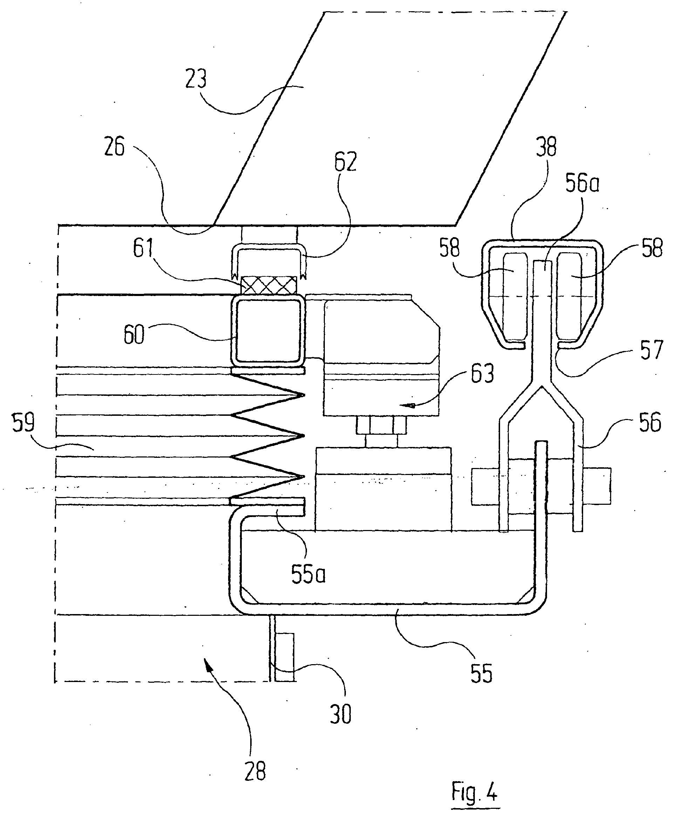

In Figur 4 ist dargestellt, wie eine (28) der Filtereinheiten 27, 28 an ihrem oberen Rand an der Schiene 38, bei der es sich um ein Hohlprofil handelt, aufgehängt ist. An einem den oberen Rand des Gehäuses 30 umgebenden Profilrahmen 55 sind an dem parallel zu den Schienen 38 laufenden Schenkel mehrere Rollenhalterungen 56 befestigt, die mit einem schmalen, oberen Abschitt 56a durch einen Schlitz 57 in den Innenraum der Schiene 38 eingeführt sind. Dort sind an dem Abschitt 56a der Rollenhalterungen 56 jeweils Rollenpaare 58 gelagert, die auf unteren Innenflächen der Schiene 38 abrollen.

Auf einem horizontalen Schenkel 55a des Profilrahmens 55 ist ein dichtender Faltenbalg 59 angebracht, der an seiner Oberseite einen Dichtrahmen 60 trägt. Auf dem Dichtrahmen 60 seinerseits ist eine umlaufende Flachdichtung 61 angeordnet. An der Unterseite des Absaugtrichters 23 ist ein nach unten offenes U-Profil 62 montiert, in welches die Flachdichtung 61 eintauchen kann. Der Dichtrahmen 60 ist schließlich mit einer Kolben-Zylindereinheit 63 verbunden, die sich ebenfalls an dem Profilrahmen 55 abstützt, derart, dass die vertikale Position des Dichtrahmens 60 und damit die Dehnung des Faltenbalgs 59 durch Betätigung der Kolben-Zylindereinheit 63 verändert werden kann.

Die Funktionsweise der oben beschriebenen Pulverlackieranlage ist wie folgt:

Der Normalbetrieb der Anlage entspricht im Wesentlichen dem Herkömmlichen: Die zu lackierenden Gegenstände 7 werden mit Hilfe des Fördersystemes 8 in die Pulverlackierkabine 4 eingebracht. Im kontinuierlichen oder intermittierenden Durchlauf werden die Gegenstände 7 durch die Applikationseinrichtungen 13, 14 mit Lackpulver beschichtet. Überschusslackpulver, welches sich nicht auf den Gegenständen 7 niedergeschlagen hat, vermischt sich mit der über die Filterdecke 18 in den Innenraum der Pulverlakkierkabine 4 eingebrachten Luft. Das Luft-/Pulvergemisch strömt im wandnahen Bereich in die Absaugrinne 19 und wird von dort dem Abfall zugeführt.

Der andere Teil des Luft-/Pulvergemisches gelangt, wie schon oben erwähnt, in die Absaugtrichter 22, 23 und von dort in die fahrbaren Filtereinheiten 27, 28. Diese sind dabei dadurch dicht an die unteren Auslassöffnungen 25, 26 der Absaugtrichter 22, 23 angeschlossen, das die Dichtrahmen 60 der entsprechenden Faltenbalge 59 mit Hilfe der jeweiligen Kolben-Zylindereinheiten 63 nach oben verfahren sind, bis die Flachdichtungen 61 am Grund der

U-Profile 62 der Absaugtrichter 22, 23 anliegen. Die Luft durchströmt sodann das Filter, welches in den oberen, quaderförmigen Abschnitten der Gehäuse 29, 30 der Filtereinheiten 27, 28 vorgesehen ist, durch das entsprechende seitliche Fenster der Filtereinheiten 27, 28 in die Aggregatkästen 31, 32 und wird von dort mit Hilfe der Gebläse 33, 34 über die Luftkanäle 35, 36 der Wiederaufbereitung oder der Außenatmosphäre zugeführt.

Das von dem Luft-/Pulvergemisch mitgeführte Pulver dagegen wird in den unteren, trichterförmigen Abschnitten der Gehäuse 29, 30 der Filtereinheiten 27, 28 gesammelt, an deren unteren Enden abgezogen und über Leitungen 64, 65 der Wiederverwendung zugeführt.

Steht ein Wechsel der Farbe des in der Pulverlackierkabine 4 aufgebrachten Lackpulvers an, werden die Filtereinheiten 27, 28 von den unteren Auslassöffnungen 25, 26 der Absaugtrichter 22, 23 gelöst. Hierzu werden die Dichtrahmen 60 unter Kompression der Faltenbälge 59 mit Hilfe der Kolben-Zylindereinheiten 63 nach unten bewegt. Nunmehr können die Filtereinheiten 27, 28 auf dem Schienensystem entweder von Hand oder motorisch betrieben aus der Position unterhalb der Auslassöffnungen 25, 26 der Absaugtrichter 22, 23 weggefahren und in eine beliebige Parkposition 43 bis 52 gefahren werden, wo sie bis zu dem Zeitpunkt bereitgehalten werden, zu dem die selbe Farbe wieder verarbeitet werden soll.

An jeder dieser Parkpositionen können die Öffnungen der Dichtrahmen 60 der Filtereinheiten 27, 28 durch einen Deckel verschlossen werden. Diese Deckel können entweder stationär an den jeweiligen Parkpositionen 43 bis 52 vorgesehen sein sein; in diesem Falle werden die Flachdichtungen 61 am oberen Ende der Faltenbalge 59 mit Hilfe der Kolben-Zylindereinheiten 63 in der selben Weise gegen die Deckel angedrückt, wie dies oben für die Verbindung der Faltenbalge 59 mit den Absaugtrichtern 22, 23 beschrieben wurde. Alternativ kann aber auch jede Filtereinheit 27, 28 mit einem Schwenkdeckel versehen sein, der in der Position, in der sich die entsprechende Filtereinheit 27, 28 unterhalb eines Absaugtrichters 22, 23 befindet, zur Seite geschwenkt wird.

Nachdem nunmehr die Positionen unterhalb der Absaugtrichter 22, 23 frei geworden sind, kann eine andere, bisher auf einer der Parkpositionen 43 bis 52 abgestellte Filtereinheit, die zur Verwendung mit der neu zu verarbeitenden Farbe bestimmt ist, unter die Absaugtrichter 22, 23 gefahren werden und an diese durch Anheben der Dichtrahmen 60 dicht angeschlossen werden.

Nunmehr kann das Lackieren innerhalb der Pulverlackierkabine 4 mit dem neuen Farbpulver aufgenommen werden.

Wird eine bestimmte Farbe auf längere Zeit nicht mehr benötigt und ist es daher nicht erforderlich, eine der Filtereinheiten, reserviert für diese Farbe, ständig bereitzuhalten, kann die entsprechende Filtereinheit in den Positionen 53, 54 des Schienensystemes gereinigt werden, so dass sie nunmehr für eine andere Farbe des Lackpulvers eingesetzt werden kann.

## Patentansprüche

1. Anlage zum Beschichten von Gegenständen mit Pulver, insbesondere zum Pulverlackieren, mit
a) einer Kabine, in der die Gegenstände durch mindestens eine Applikationseinrichtung mit Pulver beaufschlagbar sind;
b) einer Luftzuführeinrichtung, mit der Luft in die Kabine eingebracht werden kann;
c) einer Absaugeinrichtung, mit der aus dem Innenraum der Kabine über mindestens einen in dem Boden befindlichen Gemischauslass ein Gemisch aus Luft und überschüssigem Pulver absaugbar ist;
d) einer Mehrzahl von Filtereinheiten, die wahlweise unter den Gemischauslass der Kabine gefahren werden können und jeweils ein das Pulver von der Luft trennen des Filter aufweisen,
**dadurch gekennzeichnet, dass**
e) die Filtereinheiten (27, 28) an einem Tragschienensystem (37 bis 42) hängend verfahrbar sind.

2. Anlage nach Anspruch 1, **dadurch gekennzeichnet,**
**dass** das Tragschienensystem (37 bis 42) eine Mehrzahl von Parkpositionen (43 bis 52) aufweist, an denen jeweils eine Filtereinheit (27, 28) bereitgestellt werden kann.

3. Anlage nach Anspruch 2, **dadurch gekennzeichnet,**
**dass** jede Filtereinheit (27, 28) an jeder Parkposition (43 bis 52) durch einen Deckel verschließbar ist.

4. Anlage nach Anspruch 3, **dadurch gekennzeichnet,**
**dass** an jeder Parkposition (43 bis 52) ein Deckel vorgesehen ist, der gegen den Einlass (59, 60) der in der entsprechenden Parkposition (43 bis 52) befindlichen Filtereinheit (27, 28) anlegbar ist.

5. Anlage nach Anspruch 3, **dadurch gekennzeichnet,**
**dass** jede Filtereinheit (27, 28) mit einem abnehmbaren Deckel versehen ist.

6. Anlage nach Anspruch 5, **dadurch gekennzeichnet,**
**dass** der Deckel an der Filtereinheit (27, 28) verschwenkbar angebracht ist.

7. Anlage nach einem der vorhergehenden Ansprüche,
**dadurch gekennzeichnet, dass** der Einlass jeder Filtereinheit (27, 28) durch einen Faltenbalg (59) gebildet ist, der in vertikaler Richtung dehnbar ist und eine Dichtung (61) trägt.

8. Anlage nach Anspruch 7, **dadurch gekennzeichnet,**
**dass** am oberen Rand des Faltenbalgs (59) ein Dichtrahmen (60) angebracht ist, auf dem die Dichtung (61) befestigt ist und der mittels einer Antriebseinrichtung (63) in vertikaler Richtung bewegbar ist.

9. Anlage nach einem der vorhergehenden Ansprüche,
**dadurch gekennzeichnet, dass** auf dem Tragschienensystem (37 bis 42) mindestens eine Reinigungsposition (53, 54) vorgesehen ist, an welcher zum Reinigen der Filtereinheiten (27, 28) dienende Einrichtungen angeordnet sind.

## Claims

1. Installation for coating objects with powder, in particular for powder painting, having
a) a booth, in which powder can be applied to the objects by at least one application device;
b) an air supply device, with which air can be introduced into the booth;
c) an extraction device, with which a mixture of air and excess powder can be extracted from the interior of the booth via at least one mixture outlet situated in the bottom;
d) a plurality of filter units, which can be selectively moved under the mixture outlet of the booth and which each have a filter separating the powder from the air,
**characterised in that**
e) the filter units (27, 28) can be moved while suspended from a supporting-rail system (37 to 42).

2. Installation according to Claim 1, **characterised in that** the supporting-rail system (37 to 42) has a plurality of parking positions (43 to 52), at each of which a filter unit (27, 28) can be placed in readiness.

3. Installation according to Claim 2, **characterised in that** each filter unit (27, 28) can be closed at each parking position (43 to 52) by a cover.

4. Installation according to Claim 3, **characterised in that** there is provided at each parking position (43 to 52) a cover which can be placed against the inlet (59, 60) of the filter unit (27, 28) situated in the corresponding parking position (43 to 52).

5. Installation according to Claim 3, **characterised in that** each filter unit (27, 28) is provided with a removable cover.

6. Installation according to Claim 5, **characterised in that** the cover is pivotably attached to the filter unit (27, 28).

7. Installation according to one of the preceding claims, **characterised in that** the inlet of each filter unit (27, 28) is formed by a bellows (59) which is expandable in the vertical direction and carries a seal (61).

8. Installation according to Claim 7, **characterised in that** there is attached to the upper border of the bellows (59) a sealing frame (60), on which the seal (61) is fastened and which is movable in the vertical direction by means of a drive device (63).

9. Installation according to one of the preceding claims, **characterised in that** there is provided on the supporting-rail system (37 to 42) at least one cleaning position (53, 54), at which devices serving to clean the filter units (27, 28) are arranged.

## Revendications

1. Installation pour revêtir des objets à l'aide d'une poudre, notamment en vue du laquage par laque pulvérulente, comprenant
a) une cabine dans laquelle les objets peuvent être sollicités par une poudre, par l'intermédiaire d'au moins un dispositif applicateur ;
b) un dispositif d'amenée d'air, par lequel de l'air peut être introduit dans la cabine ;
c) un dispositif d'évacuation par aspiration, au moyen duquel un mélange d'air et de poudre excédentaire peut être évacué par aspiration, hors de l'espace interne de la cabine, par l'intermédiaire d'au moins une sortie de mélange située dans le fond ;
d) une pluralité d'unités de filtration pouvant être sélectivement déplacées au-dessous de la sortie du mélange, et respectivement munies d'un filtre séparant la poudre d'avec l'air,
**caractérisée par le fait que**
e) les unités de filtration (27, 28) sont mobiles en étant suspendues à un système de rails de support (37 à 42).

2. Installation selon la revendication 1, **caractérisée par le fait**
**que** le système de rails de support (37 à 42) comprend une pluralité d'emplacements de stationnement (43 à 52), auxquels une unité de filtration (27, 28) peut être respectivement tenue en attente.

3. Installation selon la revendication 2, **caractérisée par le fait**
**que** chaque unité de filtration (27, 28) peut être obturée par un couvercle à chaque emplacement de stationnement (43 à 52).

4. Installation selon la revendication 3, **caractérisée par**
la présence, à chaque emplacement de stationnement (43 à 52), d'un couvercle pouvant être appliqué contre l'admission (59, 60) de l'unité de filtration (27, 28) occupant l'emplacement de stationnement (43 à 52) correspondant.

5. Installation selon la revendication 3, **caractérisée par le fait**
**que** chaque unité de filtration (27, 28) est équipée d'un couvercle amovible.

6. Installation selon la revendication 5, **caractérisée par le fait**
**que** le couvercle est monté pivotant sur l'unité de filtration (27, 28).

7. Installation selon l'une des revendications précédentes, **caractérisée par le fait**
**que** l'admission de chaque unité de filtration (27, 28) est matérialisée par un soufflet (59) expansible dans le sens vertical et portant une garniture d'étanchement (61).

8. Installation selon la revendication 7, **caractérisée par le fait**
**qu'**un cadre d'étanchement (60), sur lequel la garniture d'étanchement (61) est fixée, est implanté sur le bord supérieur du soufflet (59) et est mobile, dans le sens vertical, au moyen d'un dispositif d'entraînement (63).

9. Installation selon l'une des revendications précédentes, **caractérisée par**
la présence, sur le système de rails de support (37 à 42), d'au moins un emplacement de nettoyage (53, 54) auquel se trouvent des dispositifs conçus pour nettoyer les unités de filtration (27, 28).
